# EUROPEAN PATENT SPECIFICATION

(11) **EP 4 340 967 B1**
(45) Date of publication and mention of the grant of the patent: **02.07.2025**
(21) Application number: 22729218.2
(22) Date of filing: 17.05.2022
(51) Int. Cl.: B01D 1/26, B01D 1/28, C02F 1/04

(54) **MECHANICAL VAPOR RECOMPRESSION ARRANGEMENT**
MECHANISCHE DAMPFREKOMPRESSIONSANORDNUNG
AGENCEMENT DE RECOMPRESSION DE VAPEUR MÉCANIQUE

(30) Priority: 19.05.2021 EP 21174587
(43) Date of publication of application: 27.03.2024
(73) Proprietor: Aquafair AB, 702 18 Örebro (SE)
(72) Inventor: ÅHRSTRÖM, Bert-Olof, 891 43 Örnsköldsvik (SE); CARLMAN, Fredrik, 702 86 Örebro (SE)
(74) Representative: Bjerkén Hynell KB
(86) International application number: PCT/EP2022/063274
(87) International publication number: WO 2022/243287

(56) References cited:
- CN-A- 108 815 871
- US-A1- 2016 158 666
- US-B2- 10 046 249

## Description

### Technical field

The present disclosure relates to a mechanical vapor recompression (MVR) arrangement, and more specifically to a highly efficient MVR arrangement, e.g. applicable for heating and cooling purposes, in liquid purification systems, or in water desalination systems.

### Background

Mechanical Vapor Recompression (MVR) is an evaporation method by which a blower, compressor, or jet ejector is used to compress, and resulting from the compression, increases the pressure, density and temperature of the vapor produced.

As a result, the vapor can serve as the heating medium for its "mother" liquid or solution being concentrated. Without the compression, the vapor would be at the same temperature as its "mother" liquid/solution, and no heat transfer could take place.

The efficiency and feasibility of this process depend on the efficiency of the compressing device (e.g., blower, compressor) and the heat transfer coefficient attained in the heat exchanger contacting the condensing vapor and the boiling "mother" solution/liquid.

Presently used MVR systems suffer from a relatively high energy-consumption.

Below some patent documents within the technical field of MVR will be briefly discussed. US10046249 disclose a compact mechanical vapor recompression evaporator system for e.g. wastewater treatment. The system has a concentric design with an inner channel and a radial MVR device at the channel end, which increases the temperature of the vapor. CN103272395A discloses an MVR system with three evaporation compartments connected in series inside an enclosure. The evaporation compartments have circular shape and have horizontal tubes running along its interior. In addition, there is a steam collector partly surrounded by the tube bundle inside the evaporation compartments. The compressor is positioned outside the enclosure.

WO2019020605A1 discloses a unit for desalination of water having three serially connected evaporator-condensers and a compressor.

DE2928392 relates to a seawater desalination by descending film evaporation and vapor compression in common horizontal tank.

US2016158666 discloses methods for thermal distillation with mechanical vapor compression.

DE102006056820 relates to a seawater desalination plant comprising a mechanical flow compressor made of radial carbon-fiber-reinforced wheel, a wheel-attachment and housing comprising the wheel.

US3868308 discloses a multiple effect evaporator for use in the distillation of liquids, in general, e.g. for desalination, and of the kind wherein evaporation takes place on the outside of substantially horizontal heat exchange tubes as a result of the heating of the inside of the tubes.

The following documents particularly relate to the turbine, or compressor part, of the system.

US20120189431A1 discloses a compressor arrangement having an axial compressor and a radial compressor that are arranged axially one behind the other.

WO200943487A1 discloses a multi-stage supercharging group having an axial turbine and a radial turbine with a concentric bypass inlet.

US20070204615A1 discloses a two-shaft turbocharger with an axial compressor and a radial compressor, wherein the radial turbine direct airflow axially toward a first turbine wheel.

When designing an MVR arrangement, it is essential that it consumes less energy than presently used systems, and that it is robust, easy to operate and maintain. To achieve that, it is essential that the MVR arrangement comprises a high efficiency turbine assembly to provide the flow of steam within the enclosure of the system and thus to achieve an improved MVR arrangement consuming less energy than the presently used system. Thus, the object of the present invention is to achieve an improved MVR arrangement in particular with regard to energy efficiency.

### Summary

The above-mentioned object is achieved by the present invention according to the independent claim.

Preferred embodiments are set forth in the dependent claims.

The MVR arrangement according to the present invention is advantageous, in that the mechanical and structural integrity of the system will improve, due to circular symmetry, and also the thermal efficiency due to complex turbine design and advantageous material conductivity. Furthermore, and most prominently; the double-tube concentric arrangement of the tubes allows the recuperation of not only the remaining heat, but also, according to various embodiments, the remaining kinetic energy of highly pressurized residual flow of steam exiting a horizontal pipe arrangement, through compartment in the compounded low pressure/high pressure axial turbine arrangement. The super-heated steam recuperation, via the conducting space, will furthermore facilitate a positive heat transfer to the low vacuum generated vapor emanating from a compartment through the inner central tube, and thereby an extra level of redundancy against water droplet condensation and impact damage on the sensitive, low pressure turbine blades in the low pressure region of the turbine. By deliberately choosing to lead the low pressure steam inside the inner central tube, surrounded by the highly pressurized residual steam, the inner central tube may still be manufactured in a slender and weight optimized way since it only receives hydrostatic pressure on the outside (the strongest load-carrying configuration of a circular pipe).

According to one embodiment, the MVR arrangement comprises e.g. three evaporation compartments (E1-E3) provided with horizontal pipes arranged within the enclosure. The number of horizontal pipes is preferably highest in the first compartment E1 and is then gradually fewer in the two other compartments in order to retain pressure and temperature even though constant loss of mass due to condensation. The central tube runs along the longitudinal axis of the enclosure, through the centers of three evaporation compartments. Further, a velocity- and pressure compounded, axial turbine assembly, arranged in an inner central tube, compresses the steam running along the tube, thereby increasing the pressure, density and temperature of the steam. The steam is then lead through the horizontal pipes.

An important technical feature that contributes to the low energy consumption, but also to the small footprint and excellent scalability of the system, is the symmetrical arrangement of the central tube, the compact turbine and the arrangement of the horizontal pipes, with regard to the longitudinal axis.

In one embodiment, the compounded axial turbine is arranged in the inner central tube having the diameter equal throughout its entire length and to compensate for the second, and lately introduced, volume flow of high pressure, uncondensed and thus highly energetic steam by making a contraction of the inner radius of the rotor, in the axial turbine. A robust solution is thereby achieved.

All produced overheated steam will, due to probability reasons, during its journey through the condensation pipes in the evaporation compartment(s) neither approach a free wall nor have the required time there to release all its evaporation heat and condensate fully. This highly energetic steam remainder would lose all internal energy by a re-introduction to the initial low pressure compressor step in the compressor - thus the inevitable loss of all pre-invested energy and system efficiency. Instead, it gets the opportunity to retain pressure, temperature as well as kinetic energy and become reintroduced in the final booster module obtained by the combined high pressure steam flow and low pressure steam flow only to compensate for the energy lost due to pipe friction, direction change (loss of momentum) and energy dissipation through insulation.

### Brief description of the drawings

Figure 1 is a schematic illustration of an embodiment of an MVR arrangement according to the present invention.
Figure 2 is a schematic illustration of part of an embodiment of the MVR arrangement
Figure 3 is a schematic illustration of an embodiment of the MVR arrangement according to the present invention.
Figure 4 is a schematic illustration of part of an embodiment of the MVR arrangement according to the present invention.
Figure 5 is a schematic cross-sectional view of the embodiment shown in figure 4.
Figure 6 is a schematic illustration of an embodiment of an MVR arrangement disclosed herein.
Figure 7 is a schematic cross-sectional view of part of an embodiment of the MVR arrangement according to the present invention.

### Detailed description

The mechanical vapor recompression (MVR) arrangement comprising the compound turbine system will now be described in detail with references to the appended figures. Throughout the figures, the same, or similar, items have the same reference signs. Moreover, the items and the figures are not necessarily to scale, emphasis instead being placed upon illustrating the principles of the invention.

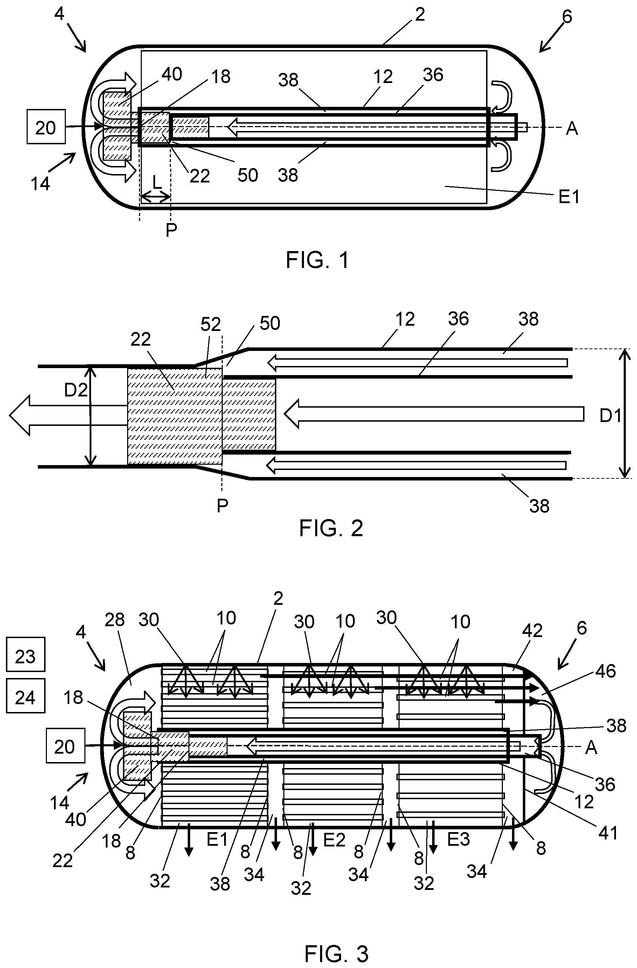

With references in particular to the figures, and in particular figures 1, 3, and 6, a mechanical vapor recompression (MVR) arrangement is provided, comprising a compound turbine system, a pressure-tight enclosure 2 provided with a first end 4, and a second end 6. The enclosure has an essentially circular cylindrical elongated shape along a longitudinal axis A, and being essentially horizontally oriented during operation of the arrangement.

The MVR arrangement further comprises a central tube 12 having an essentially circular cross-section and running within the enclosure 2 along the longitudinal axis A, and is configured to allow gaseous compounds to flow from the second end to the first end of the compound turbine system. In the figures, the flows of gaseous compounds are illustrated by block arrows.

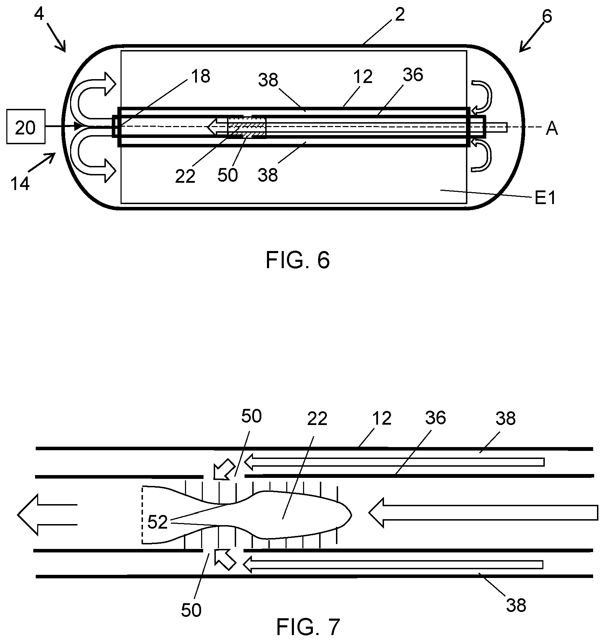

The MVR arrangement further comprises at least one evaporation compartment E1 (see figures 1, 3, and 6), arranged within the enclosure 2 along the longitudinal axis A. The at least one evaporation compartment comprises two essentially planar and circular sidewalls 8, and is provided with a plurality of longitudinal pipes 10 running from one sidewall 8 to the other sidewall 8, and that the circular sidewalls are provided with openings for said plurality of pipes. This is in particular illustrated in figure 3, but is also applicable in the embodiments illustrated in figures 1 and 6. Note that figures 1 and 6 are simplified illustrations of two embodiments of the MVR arrangement, where e.g. the plurality of longitudinal pipes are left out.

The MVR arrangement further comprises an inner central tube 36 arranged concentrically within the central tube 12 and running from the second end 6 to (see figure 6), or towards (see figure 1 and 3), the first end 4. The inner central tube 36 has an outer diameter related to the inner diameter of the central tube 12 such that a steam flow conducting space 38 is provided between an outer surface of the inner central tube 36 and an inner surface of the central tube 12. The space 38 may have a size in a radial direction of approximately 0.05-0.25 times the outer radius of the central tube 12.

The MVR arrangement comprises a turbine assembly 14 comprising a turbine 22 provided with axial turbine vane members arranged within said inner central tube 36 and structured to provide steam to flow in an axial direction along the longitudinal axis A within the inner central tube 36 from the second end 6 towards the first end 4.

A flow connection member 50 is arranged, structured to provide a flow connection between the steam flow conducting space 38 and the space within the inner central tube and wherein the turbine is provided with a flow increasing structure 52 arranged in proximity of the flow connection member 50, such that the flow within the steam flow conducting space 38 and the flow within the inner central tube are combined into one flow.

In one embodiment, illustrated by figures 6 and 7, the flow connection member 50 is achieved by providing openings in the wall of the inner central tube allowing steam to pass into the inner space of the inner central tube.

In other embodiments illustrated by figures 1-5, the inner central tube does not run all the way to the first end, but ends within the central tube, whereas the flow connection member 50 then is achieved by the opening of the end part of the inner central tube.

These various embodiments will now be disclosed more in detail.

According to the invention, the inner central tube 36 is arranged concentrically within the central tube 12 and running from the second end 6 towards the first end 4 to a predetermined position P a distance L from an opening 18 of the central tube 12 at the first end 4.

The turbine assembly 14 also comprises a motor 20 for rotating the turbine at a variable rotational speed and thereby provide the flow, which is applicable to all embodiments disclosed herein. An arrow pointing from the motor 20 to the turbine schematically illustrates the rotatable movement applied to the turbine. Preferably, a gearbox and a coupling device are arranged between the motor 20 and the turbine. In an exemplary variation, the motor 20 is an electrical motor provided with the gearbox and the coupling device. A bearing and a magnetic disc are arranged in connection with the enclosure adapted to transfer the rotational movement from the motor to the turbine within the enclosure. The bearings provided in relation to the present invention may e.g. be of a rolling element-, hybrid-, hydrostatic-, sliding-, magnetic type or combinations thereof and are designed to become lubricated with the air/steam/gas/gaseous compounds flow through the central tube.

According to the invention, the MVR arrangement comprises a first steam connection arrangement structured to provide a low pressure steam flow from said at least one evaporation chamber(s) to enter the inner central tube at the second end, and a second steam connection arrangement structured to provide a high pressure steam to enter the steam conducting space at the second end. The low pressure steam and high pressure steam are combined into one steam flow in the proximity of the flow connection member 50.

The first steam connection arrangement may comprise pipes or tubes from the at least one evaporation chamber arranged within the wall of the enclosure or at the outside of the enclosure. These pipes or tubes are schematically illustrated as filled block arrows in figure 3.

The second steam connection arrangement is provided by the plurality of longitudinal pipes 10 illustrated in figure 3.

According to the invention, illustrated by figures 6 and 7, the inner central tube 36 runs from said second end 6 to the first end 4. The flow connection member 50 includes at least one opening in the inner central tube wall, e.g. a plurality of openings circumferentially and symmetrically arranged in the inner central tube wall provided to achieve a steam flow into the inner central tube. The openings may have many different shapes, e.g. circular, or rectangular.

With reference to figure 7, the flow increasing structure may be embodied as a smaller diameter section of a turbine axle of the turbine at a position where the steam flow from the steam flow conducting space being combined with the steam flow of the inner central tube 36. The smaller diameter section will provide a decreased pressure forcing at least a part of the steam flow in the conducting space 38 into the inner central tube.

In a second alternative according to the invention, illustrated by figures 1-5, the flow connection member 50 is provided by that the inner central tube 36 ends at a predetermined position P a predetermined distance L from an opening of the central tube 12 at the first end 4. The flow increasing structure is provided by the axial turbine vane members 22 comprising two types of vane members, a first type arranged within the central tube 12 but not within the inner central tube 36, and a second type arranged within the inner central tube 36. The first type of axial turbine vane members 22 has a larger radial extension in comparison to the radial extension of vane members of the second type.

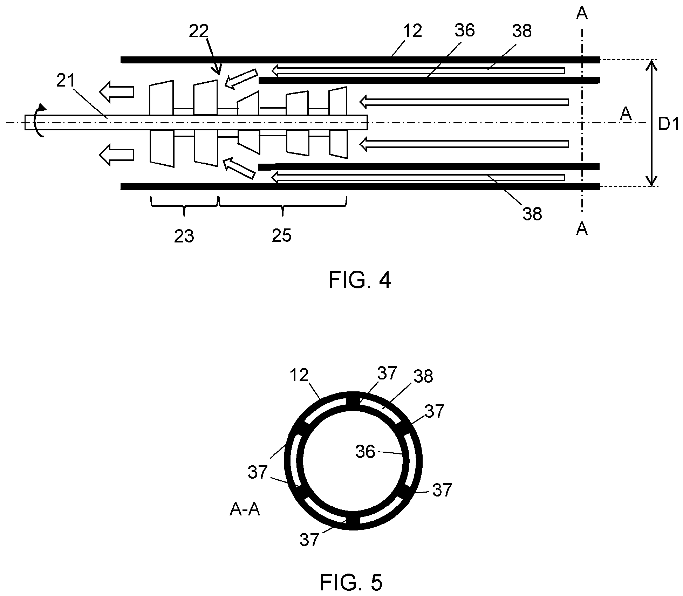

In a further variation, the outer diameter of the central tube 12 is essentially constant along the central tube between the first and second ends. This embodiment is schematically illustrated in figure 1, and more in detail in figures 4-7.

Figure 4 is a schematic illustration along the longitudinal axis A. The axial turbine vane members 22 are mounted on an axis 21 driven by the motor 20 and comprises high-pressure vane members 23 having larger outer radial extensions than the low-pressure vane members 25 being arranged within the inner central tube. The reason is to compensate for the increased mass flow where the flow from the gaseous compounds conducting space 38 is added to the flow from the interior of the inner central tube 36. In relation to the rotatable high-pressure vane members 23 and low-pressure vane members are also provided fixed stator members extending inwardly from the respective inner surface walls of the central tube 12, and the inner central tube 36, respectively. These fixed stator members are not shown in the figure, however; the individual vane pitch-angles (both rotary and stationary) are varying in each step in order to produce an optimally efficient compression, to the local and factual mass flow, regardless of vane radial extension.

Figure 5 is a schematic illustration of a cross-sectional view along A-A in figure 4. In figure 5 is shown inwardly extending splines 37 arranged at the inner surface of the central tube 12 to position the inner central tube 36 symmetrically within the central tube 12 in order to provide the conducting space 38.

According to another embodiment, schematically illustrated in figure 2, the outer diameter of the central tube 12 has a first diameter D1 at the second end 6, and a second diameter D2 at the first end 4, wherein D1>D2. The diameter decreases gradually from D1 to D2, preferably in a longitudinal section including the position P where the inner central tube 36 ends.

In still another variation, the predetermined position P is determined in dependence of the pressures of the flows in the inner central tube 36 and in the conducting space 38 such that the pressures are essentially equal, i.e. the pressures should differ less than 10%.

The hot gasses (containing both residual heat, increased density and kinetic energy) within the conducting space 38 are lead into the axial part of the turbine at or around the position P. This "low-pressure bypass" is essential to reinvest waste energy and thereby to increase overall system efficiency.

According to another embodiment, which is illustrated by figure 1 the turbine is also provided with radial turbine vane members 40 structured to provide gaseous compounds to flow in essentially radial directions from the opening 18 at the first end 4 of the central tube 12. Block arrows illustrate that flow.

Preferably, the radial turbine vane members 40 are concentrically arranged at the longitudinal axis A, in close relation to the opening of the central tube 12 at the first end 4.

The turbine, including both the axial turbine vane members 22 and the radial turbine vane members, is rotated by the motor 20 by means of the axis 21 (see figure 4), and these vane members are configured to rotate by the same rotational speed.

The MVR arrangement according to the present invention may be applied in many different applications.

In one application the MVR arrangement is applied for heating and/or cooling purposes, where hot water obtained in purified liquid collecting spaces 34 (see figure 3) are led via pipes/tubes through heat exchangers to heat e.g. housings, vehicles, etc. The outflow is indicated in figure 3 by vertical arrows.

In another application the MVR arrangement may be used for liquid purification purposes. In the following, embodiments will be described with references to figure 3, and being related to apply the MVR arrangement for liquid purification. Parts of the arrangement illustrated in figure 3 have already been discussed above with references to figures 1 and 2, and will therefore not be discussed again in order to avoid unnecessary repetition.

In one embodiment the MVR arrangement comprises numerous, particularly three, evaporation compartments E1-E3, arranged within the enclosure 2 along the longitudinal axis A. The first evaporation compartment E1 is arranged in relation to the first end 4 of the enclosure and the last evaporation compartment E3 is arranged in relation the second end 6 of the enclosure. The evaporation compartments are connected in series and have essentially circular cylindrical shapes. Each evaporation compartment comprises of two essentially planar and circular sidewalls 8, and each evaporation compartment is provided with a plurality of longitudinal pipes 10 running from one sidewall 8 to the other sidewall 8, and that the circular sidewalls are provided with openings for the plurality of pipes. The central tube 12, provided with the inner central tube 36, is arranged to run along the longitudinal axis A of the enclosure 2, through the centers of the evaporation compartments E1-E3, and configured to allow steam to flow from the second end to the first end of the enclosure. Nozzles 30 are provided in the evaporation compartments to spray the liquid into the compartment.

Advantageously, the compound turbine further comprises a low vacuum generating member 23 arranged to generate partial vacuum in the evaporation compartments, and a control unit 24 configured to control operation of the system according to designated performance.

As an alternative, the embodiment illustrated in figures 6 and 7 regarding the structure of the flow connection member 50 and the flow increasing structure 52 may be applied in the MVR arrangement illustrated in figure 3.

The control may be achieved by performing a control procedure adapted to:
- generate the partial vacuum in the evaporation compartments,
- control the motor 20 to operate the turbine at a rotational speed such that an increased temperature is induced to the steam when passing the turbine to achieve desired recycling of specific heat associated to vaporization, and
- control a plurality of valves and pumps provided to supply the system with inlet water and to receive purified liquid, e.g. water, from the system.

In a further embodiment, the number of pipes 10 is highest in the first evaporation compartment E1, then gradually fewer in the second E2 and third E3. The pipes 10 are essentially evenly spread in a cross-section perpendicular to the longitudinal axis of the respective evaporation compartment, and the pipes are configured to allow steam to flow from the first end 4 to the second end 6 of the enclosure 2.

Furthermore, a first end space 28 is provided, defined by the sidewall 8 of the first evaporation compartment E1 and the inner surface of the enclosure 2. The first end inner surface has a symmetrical concave shape displaying a predetermined curve-form adapted to guide the steam flow in a radial direction and further into a direction essentially along the longitudinal axis A towards the second end 6 of the enclosure 2.

Each evaporation compartment is preferably provided with an inflow liquid collecting container 32 arranged at the bottom of each evaporation compartment and intended to collect non-vaporized inflow liquid. The collecting container 32 comprises a level sensor configured to measure the level of inflow liquid and to generate a level signal when the liquid level deviates from a predetermined liquid level interval. Purified liquid collecting spaces 34 are provided between evaporation compartments for collecting purified liquid, and being delimited by sidewalls 8 of the adjacent evaporation compartments, and the inner surface of the enclosure. Vertical arrows indicate outflows of purified liquid, e.g. hot water, via connected outflow pipes/tubes.

In still a further embodiment, the steam produced by evaporation under partial vacuum is lead through the central tube 12, the steam conducting space 38, and the inner central tube 36 to the turbine for compression and subsequently recuperation of evaporation heat.

In an example of the relative sizes of some parts of the system, the inner diameter of the central tube 12 is in the range of 0. 1-0.5 times of the outer diameter of the enclosure 2, and the inner diameter of a longitudinal pipe 10 is in the range of 0.01-0.1 times of the diameter of the central tube 12.

The second end 6 of the enclosure 2 may be provided with a delimitation wall 41 essentially parallel to the sidewall 8 of the evaporation compartment. The delimitation wall 41 is arranged to divide the space defined by the sidewall closest to the evaporation compartment and the outer wall of the enclosure into a second end liquid collecting space 42, closest to the evaporation compartment, and an alternative second end space 46. The central tube 12 opens into the second end liquid collecting space 42, and the inner central tube 36 opens into the alternative second end space 46.

The steam produced by evaporation under partial vacuum is lead through the inner central tube 36 to the low-pressure turbine region for initial compression and becomes, at a suitable pressure step inside the axial turbine; compounded with the high-pressure steam collected in second end liquid collecting space 42 and transported to that particular pressure step in the turbine via the steam conducting space 38, that ends immediately before the said compressor step.

Subsequently; both mass flows are combined pressurized by the remaining high-pressure region of the axial compressor and further compressed and lead to direction change of its kinetic energy, in the specially designed radial compressor, and lead through the horizontal pipes 10 for subsequent recuperation of the increased internal energy. The axial turbine vane members 16 are structured to protrude, at least partly, into the inner central tube 36 in order to help sustaining partial vacuum in the evaporation compartments E1-E3, facilitate the flow of steam from the second end 6 to the first end 4 of the enclosure and to bring the low-pressure steam up to practically the same energetic state as the highly pressurized residual steam exiting the horizontal tubes 10 after completing a full cycle of vaporization heat recuperation.

The kinetic energy of the compressed vapor is harvested in the last high-pressure manifold 42 (adjacent to the second end of the enclosure) and lead back to the turbine via the steam conducting space 38 in order to assist rotation of the axial-/radial turbine and thereby increase system efficiency.

Preferably, the turbine, stators and surrounding walls inside the axial turbine assembly are made by a suitable 3D-printing technique, preferably from metallic or composite material, further preferably of thermoplastic nature, and optionally coated for higher resilience. The bearings (rolling element, sliding or hydrodynamic by fluid or gas) in a pivot point inside the inner central tube 36 and in the high pressure turbine compartment are foreseen to become lubricated, preferably with low-pressure steam, and their housing may become externally cooled.

## Claims

1. A mechanical vapor recompression (MVR) arrangement, comprising a compound turbine system, a pressure-tight enclosure (2) provided with a first end (4) and a second end (6), having an essentially circular cylindrical elongated shape along a longitudinal axis A, and being essentially horizontally oriented during operation of the arrangement, and a central tube (12) having an essentially circular cross-section and running within said enclosure (2) along said longitudinal axis A and configured to allow steam to flow from the second end to the first end of the enclosure, the MVR arrangement further comprises at least one evaporation compartment E1, arranged within said enclosure (2) along the longitudinal axis A, said at least one evaporation compartment comprises two essentially planar and circular sidewalls (8), and is provided with a plurality of longitudinal pipes (10) running from one sidewall (8) to the other sidewall (8), and that the circular sidewalls are provided with openings for said plurality of pipes,
**characterized in that** MVR arrangement further comprises an inner central tube (36) arranged concentrically within said central tube (12) and running from said second end (6) to, or towards, the first end (4), wherein said inner central tube (36) has an outer diameter related to the inner diameter of said central tube (12) such that a steam flow conducting space (38) is provided between an outer surface of the inner central tube (36) and an inner surface of the central tube (12), said longitudinal pipes are parallel to, and located around said central tube (12),
and **in that** the compound turbine system comprises a turbine assembly (14) comprising a turbine provided with axial turbine vane members (22) arranged at least partly within said inner central tube (36) and structured to provide steam to flow in an axial direction along the longitudinal axis A within said inner central tube (36) from said second end (6) towards said first end (4), the turbine assembly also comprises a motor (20) for rotating said turbine, wherein a flow connection member (50) is arranged, structured to provide a flow connection between said steam flow conducting space (38) and the space within the inner central tube, and wherein said turbine is provided with a flow increasing structure (52) arranged in proximity of said flow connection member (50), such that the flow within the steam flow conducting space (38) and the flow within the inner central tube are combined into one flow, and the combined flow, being a high pressure steam, is led through said longitudinal pipes (10) from the first end (4) to the second end (6) of the enclosure (2), and that the MVR arrangement further comprises a first steam connection arrangement structured to provide a low pressure steam flow from said at least one evaporation chamber(s) to enter the inner central tube at the second end, and a second steam connection arrangement structured to provide said high pressure steam to enter the steam conducting space at the second end, wherein the low pressure steam and high pressure steam are combined into one steam flow in the proximity of said flow connection member (50), and wherein either
- said inner central tube (36) runs from said second end (6) to the first end (4), and that said flow connection member (50) includes at least one opening in the inner central tube wall, and wherein said flow increasing structure is a smaller diameter section of a turbine axle of said turbine at a position where said steam flow from the steam flow conducting space being combined with the steam flow of said inner central tube (36),
or
- said flow connection member (50) is provided by that the inner central tube (36) ends at a predetermined position P a predetermined distance L from an opening of the central tube (12) at the first end (4), and wherein the flow increasing structure is provided by the axial turbine vane members (22) comprising two types of vane members, a first type arranged within said central tube (12) but not within said inner central tube (36), and a second type arranged within said inner central tube (36), wherein the first type of axial turbine vane members (22) has a larger radial extension in comparison to the radial extension of vane members of the second type.

2. The MVR arrangement according to claim 1, wherein said flow connection member (50) comprises a plurality of openings circumferentially and symmetrically arranged in the inner central tube wall.

3. The MVR arrangement according to claim 1, wherein the outer diameter of said central tube (12) has a first diameter D1 at the second end (6), and a second diameter D2 at the first end (4), wherein D1>D2, and that the diameter decreases gradually from D1 to D2 in a longitudinal section including said position P.

4. The MVR arrangement according to any of claims 1 or 3, wherein the turbine is also provided with radial turbine vane members (40) structured to provide gaseous compounds to flow in essentially radial directions from the opening (18) at said first end (4) of said central tube (12).

5. The MVR arrangement according to claim 4, wherein said radial turbine vane members (40) are concentrically arranged at said longitudinal axis A in close relation to the opening of the central tube (12) at the first end (4).

6. The MVR arrangement according to any of claims 1-5, comprising numerous, particularly three, evaporation compartments E1-E3, arranged within said enclosure (2) along the longitudinal axis A, the first evaporation compartment E1 is arranged in relation to the first end (4) of the enclosure and the last evaporation compartment E3 is arranged in relation the second end (6) of the enclosure, the evaporation compartments are connected in series and have essentially circular cylindrical shapes, each evaporation compartment comprises of two essentially planar and circular sidewalls (8), and each evaporation compartment is provided with a plurality of longitudinal pipes (10) running from one sidewall (8) to the other sidewall (8), and that the circular sidewalls are provided with openings for said plurality of pipes,
wherein said central tube (12) is arranged to run along the longitudinal axis A of the enclosure (2) through the centers of said evaporation compartments E1-E3, and configured to allow steam to flow from the second end to the first end of the enclosure.

7. The MVR arrangement according to claim 6, wherein the number of pipes (10) is highest in the first evaporation compartment E1, then gradually fewer in the second E2 and third E3, and wherein the pipes (10) are essentially evenly spread in a cross-section perpendicular to the longitudinal axis of the respective evaporation compartment, and the pipes are configured to allow steam to flow from the first end (4) to the second end (6) of the enclosure (2).

8. The MVR arrangement according to any of claims 4 and 5, wherein a first end space (28) is provided, defined by the sidewall (8) of the first evaporation compartment E1 and the inner surface of the enclosure (2), wherein said first end inner surface has a symmetrical concave shape displaying a predetermined curve-form adapted to guide the steam flow in a radial direction and further into a direction essentially along the longitudinal axis A towards the second end (6) of the enclosure (2).

9. The MVR arrangement according to any of claims 6-8, wherein purified liquid collecting spaces (34) are provided between evaporation compartments for collecting purified liquid, and being delimited by sidewalls (8) of the adjacent evaporation compartments, and the inner surface of the enclosure.

10. The MVR arrangement according to any of claims 6-9, wherein the steam produced by evaporation under partial vacuum is lead through said central tube (12), said steam conducting space (38), and said inner central tube (36) to the turbine for compression and subsequently recuperation of evaporation heat.

## Patentansprüche

1. Mechanische Dampfkompressionsanordnung (MVR-Anordnung), umfassend ein Verbundturbinensystem, eine druckdichte Einhausung (2), die mit einem ersten Ende (4) und mit einem zweiten Ende (6) versehen ist, eine im Wesentlichen kreisförmige, zylindrische, längliche Form entlang einer Längsachse A aufweist und während des Betriebs der Vorrichtung im Wesentlichen horizontal ausgerichtet ist, und ein zentrales Rohr (12) mit einem im Wesentlichen kreisförmigen Querschnitt, das innerhalb der Einhausung (2) entlang der Längsachse A verläuft und dazu ausgebildet ist, einen Dampfstrom vom zweiten Ende zum ersten Ende der Einhausung zu ermöglichen, wobei die MVR-Anordnung ferner wenigstens eine Verdampfungskammer E1 umfasst, die innerhalb der Einhausung (2) entlang der Längsachse A angeordnet ist, wobei die wenigstens eine Verdampfungskammer zwei im Wesentlichen ebene und kreisförmige Seitenwände (8) umfasst und mit einer Mehrzahl von Längsrohren (10) versehen ist, die von einer Seitenwand (8) zur anderen Seitenwand (8) verlaufen, und dass die kreisförmigen Seitenwände mit Öffnungen für die Mehrzahl von Rohren versehen sind,
**dadurch gekennzeichnet, dass** die MVR-Anordnung ferner ein inneres Zentralrohr (36) umfasst, das konzentrisch innerhalb des Zentralrohrs (12) angeordnet ist und von dem zweiten Ende (6) zum ersten Ende (4) oder in Richtung zu diesem hin verläuft, wobei das innere Zentralrohr (36) einen Außendurchmesser hat, der so auf den Innendurchmesser des Zentralrohrs (12) bezogen ist, dass ein einen Dampfstrom leitender Raum (38) zwischen einer Außenfläche des inneren Zentralrohrs (36) und einer Innenfläche des Zentralrohrs (12) bereitgestellt ist, wobei die Längsrohre parallel zu dem Zentralrohr (12) und um dieses herum angeordnet sind,
und dass das Verbundturbinensystem eine Turbinenbaugruppe (14) umfasst, die eine Turbine umfasst, die mit axialen Turbinenschaufelelementen (22) versehen ist, die wenigstens teilweise innerhalb des inneren Zentralrohrs (36) angeordnet und so aufgebaut sind, dass sie Dampf in einer axialen Richtung entlang der Längsachse A innerhalb des inneren Zentralrohrs (36) von dem zweiten Ende (6) zu dem ersten Ende (4) strömen lassen, wobei die Turbinenbaugruppe auch einen Motor (20) zum Drehen der Turbine umfasst, wobei ein Stromverbindungselement (50) angeordnet ist, das so strukturiert ist, dass es eine Strömungsverbindung zwischen dem den Dampfstrom leitenden Raum (38) und dem Raum innerhalb des inneren Zentralrohrs bereitstellt, und wobei die Turbine mit einer durchflusserhöhenden Struktur (52) versehen ist, die in der Nähe des Stromverbindungselements (50) angeordnet ist, so dass der Strom innerhalb des den Dampfstrom leitenden Raums (38) und der Strom innerhalb des inneren Zentralrohrs zu einem Strom kombiniert werden und der kombinierte Strom, der ein Hochdruckdampf ist, durch die Längsrohre (10) vom ersten Ende (4) zum zweiten Ende (6) der Einhausung (2) geleitet wird, und dass die MVR-Anordnung ferner umfasst: eine erste Dampfverbindungsanordnung, die so strukturiert ist, dass sie einen Niederdruckdampfstrom von der mindestens einen Verdampfungskammer zum Eintritt in das innere Zentralrohr am zweiten Ende bereitstellt, und eine zweite Dampfverbindungsanordnung, die so strukturiert ist, dass sie den Hochdruckdampf bereitstellt, sodass er in den Dampf leitenden Raum am zweiten Ende eintritt, wobei der Niederdruckdampf und der Hochdruckdampf in der Nähe des Stromverbindungselements (50) zu einem Dampfstrom kombiniert werden, und wobei entweder
- das innere Zentralrohr (36) von dem zweiten Ende (6) zu dem ersten Ende (4) verläuft und das Stromverbindungselement (50) wenigstens eine Öffnung in der inneren Zentralrohrwand aufweist, und wobei die durchflusserhöhende Struktur ein Abschnitt mit kleinerem Durchmesser einer Turbinenachse der Turbine an einer Position ist, an der der Dampfstrom aus dem den Dampfstrom leitenden Raum mit dem Dampfstrom des inneren Zentralrohrs (36) kombiniert wird, oder
- das Stromverbindungselement (50) dadurch bereitgestellt ist, dass das innere Zentralrohr (36) an einer vorbestimmten Position P in einem vorbestimmten Abstand L von einer Öffnung des Zentralrohrs (12) am ersten Ende (4) endet, und wobei die durchflusserhöhende Struktur durch die axialen Turbinenschaufelelemente (22) bereitgestellt ist, die zwei Arten von Schaufelelementen umfassen, einen ersten Typ, der innerhalb des Zentralrohrs (12), jedoch nicht innerhalb des inneren Zentralrohrs (36) angeordnet ist, und einen zweiten Typ, der innerhalb des inneren Zentralrohrs (36) angeordnet ist, wobei der erste Typ von axialen Turbinenschaufelelementen (22) eine größere radiale Ausdehnung im Vergleich zur radialen Ausdehnung von Schaufelelementen des zweiten Typs aufweist.

2. MVR-Anordnung nach Anspruch 1, wobei das Stromverbindungselement (50) eine Mehrzahl von Öffnungen umfasst, die in Umfangsrichtung und symmetrisch in der inneren Zentralrohrwand angeordnet sind.

3. MVR-Anordnung nach Anspruch 1, wobei der Außendurchmesser des Zentralrohrs (12) am zweiten Ende (6) einen ersten Durchmesser D1 und am ersten Ende (4) einen zweiten Durchmesser D2 aufweist, wobei D1 > D2 ist, und dass der Durchmesser in einem Längsschnitt, der die Position P umfasst, allmählich von D1 zu D2 abnimmt.

4. MVR-Anordnung nach einem der Ansprüche 1 oder 3, wobei die Turbine außerdem mit radialen Turbinenschaufelelementen (40) versehen ist, die so ausgebildet sind, dass sie gasförmige Zusammensetzungen derart bereitstellen, dass sie ausgehend von der Öffnung (18) an dem ersten Ende (4) des Zentralrohrs (12) in im Wesentlichen radialen Richtungen fließen.

5. MVR-Anordnung nach Anspruch 4, wobei die radialen Turbinenschaufelelemente (40) konzentrisch an der Längsachse A in enger Beziehung zur Öffnung des Zentralrohrs (12) am ersten Ende (4) angeordnet sind.

6. MVR-Anordnung nach einem der Ansprüche 1 bis 5, umfassend zahlreiche, insbesondere drei, Verdampfungskammern E1-E3, die innerhalb der Einhausung (2) entlang der Längsachse A angeordnet sind, wobei die erste Verdampfungskammer E1 in Bezug auf das erste Ende (4) der Einhausung angeordnet ist und wobei die letzte Verdampfungskammer E3 in Bezug auf das zweite Ende (6) der Einhausung angeordnet ist, wobei die Verdampfungskammern in Reihe verbunden sind und im Wesentlichen zylindrische Formen aufweisen, wobei jede Verdampfungskammer zwei im Wesentlichen ebene und kreisförmige Seitenwände (8) umfasst und wobei jede Verdampfungskammer mit einer Mehrzahl von Längsrohren (10) bereitgestellt ist, die von einer Seitenwand (8) zur anderen Seitenwand (8) verlaufen, und dass die kreisförmigen Seitenwände mit Öffnungen für die Mehrzahl von Rohren bereitgestellt sind,
wobei das zentrale Rohr (12) so angeordnet ist, dass es entlang der Längsachse A der Einhausung (2) durch die Mittelpunkte der Verdampfungskammern E1-E3 verläuft, und dazu ausgebildet ist, Dampf vom zweiten Ende zum ersten Ende der Einhausung strömen zu lassen.

7. MVR-Anordnung nach Anspruch 6, wobei die Anzahl der Rohre (10) in der ersten Verdampfungskammer E1 am höchsten ist, dann allmählich in der zweiten E2 und dritten E3 abnimmt, und wobei die Rohre (10) in einem Querschnitt senkrecht zur Längsachse der jeweiligen Verdampfungskammer im Wesentlichen gleichmäßig verteilt sind, und wobei die Rohre dazu ausgebildet sind, Dampf von dem ersten Ende (4) zu dem zweiten Ende (6) der Einhausung (2) strömen zu lassen.

8. MVR-Anordnung nach einem der Ansprüche 4 und 5, wobei ein erster Endraum (28) bereitgestellt ist, der durch die Seitenwand (8) der ersten Verdampfungskammer E1 und die Innenfläche der Einhausung (2) definiert ist, wobei die erste Endinnenfläche eine symmetrische konkave Form mit einer vorbestimmten Kurvengestalt aufweist, die dazu ausgelegt ist, den Dampfstrom in einer radialen Richtung und weiter in einer Richtung im Wesentlichen entlang der Längsachse A zum zweiten Ende (6) der Einhausung (2) zu leiten.

9. MVR-Anordnung nach einem der Ansprüche 6 bis 8, wobei zwischen Verdampfungskammern Reinigungsflüssigkeitssammelräume (34) zum Sammeln von Reinigungsflüssigkeit bereitgestellt sind, die durch Seitenwände (8) der benachbarten Verdampfungskammern und die Innenfläche der Einhausung begrenzt sind.

10. MVR-Anordnung nach einem der Ansprüche 6 bis 9, wobei der durch Verdampfung unter Teilvakuum erzeugte Dampf durch das zentrale Rohr (12), den Dampfleitraum (38) und das innere zentrale Rohr (36) zur Turbine geleitet wird, um dort komprimiert zu werden und um anschließend die Verdampfungswärme zurückzugewinnen.

## Revendications

1. Agencement de recompression mécanique de vapeur (MVR), comprenant un système de turbine compound, une enceinte étanche à la pression (2) munie d'une première extrémité (4) et d'une deuxième extrémité (6), ayant une forme allongée cylindrique essentiellement circulaire le long d'un axe longitudinal A, et étant orientés essentiellement horizontalement pendant le fonctionnement de l'agencement, et un tube central (12) ayant une coupe transversale essentiellement circulaire et s'étendant au sein de ladite enceinte (2) le long dudit axe longitudinal A et configuré pour permettre à la vapeur de s'écouler de la deuxième extrémité à la première extrémité de l'enceinte, l'agencement MVR comprend en outre au moins un compartiment d'évaporation E1, agencé au sein de ladite enceinte (2) le long de l'axe longitudinal A, ledit au moins un compartiment d'évaporation comprend deux parois latérales essentiellement planes et circulaires (8), et est muni d'une pluralité de tuyaux longitudinaux (10) s'étendant d'une paroi latérale (8) à l'autre paroi latérale (8), et que les parois latérales circulaires sont pourvues d'ouvertures pour ladite pluralité de tuyaux,
**caractérisé en ce que** l'agencement MVR comprend en outre un tube central interne (36) agencé de manière concentrique au sein dudit tube central (12) et s'étendant depuis ladite deuxième extrémité (6) jusqu'à, ou vers, la première extrémité (4), dans lequel ledit tube central interne (36) a un diamètre externe lié au diamètre interne dudit tube central (12) de sorte qu'un espace conducteur d'écoulement de vapeur (38) est prévu entre une surface externe du tube central interne (36) et une surface interne du tube central (12), lesdits tuyaux longitudinaux sont parallèles audit tube central (12) et situé autour de celui-ci,
et **en ce que** le système de turbine compound comprend un ensemble turbine (14) comprenant une turbine munie d'organes d'aube de turbine axiaux (22) agencés au moins partiellement au sein dudit tube central interne (36) et structurés pour fournir de la vapeur pour s'écouler dans une direction axiale le long de l'axe longitudinal A au sein dudit tube central interne (36) depuis ladite deuxième extrémité (6) vers ladite première extrémité (4), l'ensemble turbine comprend également un moteur (20) pour faire tourner ladite turbine, dans lequel un organe de raccordement d'écoulement (50) est agencé, structuré pour fournir un raccordement d'écoulement entre ledit espace conducteur d'écoulement de vapeur (38) et l'espace au sein du tube central interne, et dans lequel ladite turbine est munie d'une structure d'augmentation d'écoulement (52) agencée à proximité dudit organe de raccordement d'écoulement (50), de telle sorte que l'écoulement au sein de l'espace conducteur d'écoulement de vapeur (38) et l'écoulement au sein du tube central interne sont combinés en un écoulement, et l'écoulement combiné, qui est une vapeur haute pression, est conduit à travers lesdits tuyaux longitudinaux (10) de la première extrémité (4) à la deuxième extrémité (6) de l'enceinte (2), et **en ce que** l'agencement MVR comprend en outre un premier agencement de raccordement de vapeur structuré pour fournir un écoulement de vapeur basse pression depuis ladite au moins une chambre(s) d'évaporation pour entrer dans le tube central interne au niveau de la deuxième extrémité, et un deuxième agencement de raccordement de vapeur structuré pour fournir ladite vapeur haute pression pour entrer dans l'espace conducteur de vapeur au niveau de la deuxième extrémité, dans lequel la vapeur basse pression et la vapeur haute pression sont combinées en un écoulement de vapeur à proximité dudit organe de raccordement d'écoulement (50), et dans lequel
- ledit tube central interne (36) s'étend de ladite deuxième extrémité (6) à la première extrémité (4), et ledit organe de raccordement d'écoulement (50) comporte au moins une ouverture dans la paroi de tube central interne, et dans lequel ladite structure d'augmentation d'écoulement est une section de diamètre plus petit d'un axe de turbine de ladite turbine au niveau d'une position où ledit écoulement de vapeur provenant de l'espace conducteur d'écoulement de vapeur est combiné avec l'écoulement de vapeur dudit tube central interne (36),
ou
- ledit organe de raccordement d'écoulement (50) est fourni par le fait que le tube central interne (36) se termine au niveau d'une position prédéterminée P à une distance prédéterminée L d'une ouverture du tube central (12) au niveau de la première extrémité (4), et dans lequel la structure d'augmentation d'écoulement est fournie par les organes d'aube de turbine axiaux (22) comprenant deux types d'organes d'aube, un premier type agencé au sein dudit tube central (12) mais pas au sein dudit tube central interne (36), et un deuxième type agencé au sein dudit tube central interne (36), dans lequel le premier type d'organes d'aube de turbine axiaux (22) a une extension radiale plus grande comparativement à l'extension radiale des organes d'aube du deuxième type.

2. Agencement de MVR selon la revendication 1, dans lequel ledit organe de raccordement d'écoulement (50) comprend une pluralité d'ouvertures agencées de manière circonférentielle et symétrique dans la paroi de tube central interne.

3. Agencement de MVR selon la revendication 1, dans lequel le diamètre extérieur dudit tube central (12) a un premier diamètre D1 au niveau de la deuxième extrémité (6), et un deuxième diamètre D2 au niveau de la première extrémité (4), dans lequel D1 > D2, et le diamètre diminue progressivement de D1 à D2 dans une section longitudinale comportant ladite position P.

4. Agencement de MVR selon l'une quelconque des revendications 1 ou 3, dans lequel la turbine est également munie d'organes d'aube de turbine radiaux (40) structurés pour fournir des composés gazeux pour s'écouler dans des directions essentiellement radiales depuis l'ouverture (18) au niveau de ladite première extrémité (4) dudit tube central (12).

5. Agencement de MVR selon la revendication 4, dans lequel lesdits organes d'aube de turbine radiaux (40) sont agencés de manière concentrique au niveau dudit axe longitudinal A en relation étroite avec l'ouverture du tube central (12) au niveau de la première extrémité (4).

6. Agencement de MVR selon l'une quelconque des revendications 1 à 5, comprenant de nombreux, en particulier trois, compartiments d'évaporation E1-E3, disposé au sein de ladite enceinte (2) le long de l'axe longitudinal A, le premier compartiment d'évaporation E1 est agencé par rapport à la première extrémité (4) de l'enceinte et le dernier compartiment d'évaporation E3 est agencé par rapport à la deuxième extrémité (6) de l'enceinte, les compartiments d'évaporation sont raccordés en série et ont des formes cylindriques essentiellement circulaires, chaque compartiment d'évaporation comprend deux parois latérales essentiellement planes et circulaires (8), et chaque compartiment d'évaporation est muni d'une pluralité de tuyaux longitudinaux (10) s'étendant d'une paroi latérale (8) à l'autre paroi latérale (8), et que les parois latérales circulaires sont pourvues d'ouvertures pour ladite pluralité de tuyaux, et dans lequel ledit tube central (12) est agencé pour s'étendre le long de l'axe longitudinal A de l'enceinte (2) à travers les centres desdits compartiments d'évaporation E1-E3, et configuré pour permettre à la vapeur de s'écouler de la deuxième extrémité à la première extrémité de l'enceinte.

7. Agencement de MVR selon la revendication 6, dans lequel le nombre de tuyaux (10) est le plus élevé dans le premier compartiment d'évaporation E1, puis graduellement moins élevé dans les deuxième E2 et troisième E3, et dans lequel les tuyaux (10) sont essentiellement répartis de manière uniforme selon une coupe transversale perpendiculaire à l'axe longitudinal du compartiment d'évaporation respectif, et les tuyaux sont configurés pour permettre à la vapeur de s'écouler de la première extrémité (4) à la deuxième extrémité (6) de l'enceinte (2).

8. Agencement de MVR selon l'une quelconque des revendications 4 et 5, dans lequel un premier espace d'extrémité (28) est prévu, défini par la paroi latérale (8) du premier compartiment d'évaporation E1 et la surface interner de l'enceinte (2), dans lequel ladite première surface interne d'extrémité a une forme concave symétrique présentant une forme de courbe prédéterminée adaptée pour guider l'écoulement de vapeur dans une direction radiale et en outre dans une direction essentiellement le long de l'axe longitudinal A vers la deuxième extrémité (6) de l'enceinte (2).

9. Agencement de MVR selon l'une quelconque des revendications 6 à 8, dans lequel des espaces de collecte de liquide purifié (34) sont prévus entre des compartiments d'évaporation pour collecter le liquide purifié, et qui sont délimités par des parois latérales (8) des compartiments d'évaporation adjacents, et la surface interne de l'enceinte.

10. Agencement de MVR selon l'une quelconque des revendications 6 à 9, dans lequel la vapeur produite par évaporation sous vide partiel est conduite à travers ledit tube central (12), ledit espace conducteur de vapeur (38) et ledit tube central interne (36) vers la turbine pour compression et ensuite récupération de la chaleur d'évaporation.
